(19) Europäisches Patentamt
European Patent Office
Office européen des brevets

(11) Veröffentlichungsnummer: **0 003 514**
**B1**

(12) **EUROPÄISCHE PATENTSCHRIFT**

(45) Veröffentlichungstag der Patentschrift: **28.07.82**

(51) Int. Cl.³: **C 07 F 7/12**

(21) Anmeldenummer: **79100166.2**

(22) Anmeldetag: **19.01.79**

(54) **Verfahren zur Addition von Dialkylhalogenhydrogensilanen an ungesättigte Kohlenwasserstoffverbindungen und die erhaltenen Silane.**

(30) Priorität: **01.02.78 DE 2804204**

(43) Veröffentlichungstag der Anmeldung:
**22.08.79 Patentblatt 79/17**

(45) Bekanntmachung des Hinweises auf die Patenterteilung:
**28.07.82 Patentblatt 82/30**

(84) Benannte Vertragsstaaten:
**BE DE FR GB**

(56) Entgegenhaltungen:
**US - A - 2 555 589**
**US - A - 2 626 268**

Die Akte enthält technische Angaben die nach dem Eingang der Anmeldung eingereicht wurden und die nicht in dieser Patentschrift enthalten sind.

(73) Patentinhaber: **BAYER AG**
**Zentralbereich Patente, Marken und Lizenzen**
**D-5090 Leverkusen 1, Bayerwerk (DE)**

(72) Erfinder: **Finke, Ulrich, Dr.**
**Hermann-Löns-Weg 15**
**D-7505 Ettlingen (DE)**
Erfinder: **Moretto, Hans-Heinrich, Dr.**
**Formesstrasse 13**
**D-5000 Köln 80 (DE)**

**EP 0 003 514 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Addition von Dialkylhalogenhydrogensilanen an ungesättigte Kohlenwasserstoffverbindungen und die erhaltenen Silane

Die vorliegende Erfindung betrifft ein Verfahren zur Addition von Dialkylhalogenhydrogensilanen an Alkene und Alkaline in Gegenwart eines Katalysators.

Von besonderer praktischer Bedeutung für die Chemie der Silicone ist die Anlagerungsfähigkeit der Si-H-Bindung an ungesättigte Kohlenwasserstoffe. Die Reaktion öffnet den Zugang zu auf anderen Wegen oft nur schwer zugänglichen organosubstituierten Silanen, insbesondere solchen mit hoher Kohlenstoffzahl (vgl. z.B. W. Noll, Chemie und Technologie der Silicone (Weinheim 1968) S. 45 ff).

Diese Additionsreaktionen werden nach den bisher üblichen Verfahren z.B. durch UV-Licht und Peroxide katalysiert. Als Nebenreaktion läuft oft mehr oder weniger ausgeprägt eine Eigenpolymerisation des Olefins ab, die mit der Additionsreaktion konkurriert.

Auch Edel- und Übergangsmetalle bzw. ihre Verbindungen katalysieren die Anlagerung von Si-H-Verbindungen an Alkene und Alkine. Beispiele für solche Metallverbindungen sind $H_2PtCl_6$; $Pt[P(C_6H_5)_3]_4$; $PtCl_2[P(C_6H_5)_3]$; $Ni(C_2H_5)_2$ (bipy); $Ni(acac)_2$; $Al(C_2H_5)_3$ (bipy = Bipyridylrest; acac = Acetylacetanatrest).

Die Reaktionen lassen sich im einzelnen unter verschiedenen Bedingungen durchführen. Dabei ist es oft unerläßlich, unter Druck bzw. bei hohen Temperaturen zu arbeiten und lange Reaktionszeiten in Kauf zu nehmen, auch sind unter solchen Bedingungen Umlagerungsreaktionen der Reaktionsprodukte bzw. der Alkene bekannt geworden. Letzteres tritt besonders dann auf, wenn die Alkene stark verzweigt sind.

Gegenstand der vorliegenden Erfindung ist nun ein Verfahren zur Addition von Olefinen oder Acetylenen an Silane der allgemeinen Formel

$$R_1R_2SiXH$$

wobei

X für Cl oder Br,

$R_1$ und $R_2$ — gleich oder verschieden — für einen geradkettigen oder verzweigten oder cyclischen Alkylrest mit 1—20 C-Atomen steht, in Gegenwart eines Metallhalogenids, das dadurch gekennzeichnet ist, daß man die Addition in Gegenwart von Aluminiumchlorid, -bromid, -oxidchlorid und/oder -oxidbromid bei Temperaturen von —30 bis +60°C durchführt.

Überraschenderweise hat es sich gezeigt, daß diese Reaktionen mit Hilfe gut zugänglicher Katalysatoren überaus leicht, mit guten Ausbeuten und ohne wesentliche Bildung von Umlagerungsprodukten ablaufen. Vor allem gegenüber den bislang gebräuchlichen Umlagerungskatalysatoren wie z.B. $SnCl_4$ oder $TiCl_4$ bieten die erfindungsgemäß eingesetzten Katalysatoren den Vorteil, daß man auch bei erheblich niederen Temperaturen arbeiten kann.

Die Katalysatoren Aluminiumchlorid oder auch Aluminiumbromid sowie die entsprechenden Oxidhalogenide, bevorzugt jedoch $AlCl_3$ können im allgemeinen in Mengen von etwa 0,01 bis 5 Gew.-%, vorzugsweise 0,1—3 Gew.-% — bezogen auf die Reaktionsmischung — eingesetzt werden. Zur Erhöhung der Raum-Zeit-Ausbeuten ist es jedoch von Vorteil, die Katalysatorkonzentration zu erhöhen; besonders bei kontinuierlichen Verfahren empfiehlt es sich, die Reaktion z.B. in Festbetten, bestehend aus Katalysator, oder in Reaktionsgefäßen, die größere Mengen Katalysator enthalten, durchzuführen.

Die Temperatur während der Reaktion wird auf —30 bis +60°C — je nach Reaktionspartner — eingestellt.

Als Ausgangssubstanzen für das erfindungsgemäße Verfahren eignen sich z.B. $(CH_3)_2SiHCl$; $(CH_3)(C_2H_5)SiHCl$; $(C_2H_5)_2SiHCl$; $(C_3H_7)(CH_3)SiHCl$.

Von besonderer praktischer Bedeutung ist insbesondere das Dimethylchlorhydrogensilan, ein Nebenprodukt bei der Direktsynthese (Rochow-Müller-Verfahren) von Methylchlorsilanen.

Als ungesättigte Verbindungen kommen Olefine und Acetylene zum Einsatz.

Beispiele für geeignete Verbindungen mit Doppel- bzw. Dreifach-C-C-bindungen sind:

2-Methylbuten-2, Propylen, Cyclohexen, Styrol, Acetylen 2,2,4,6,6-Pentamethylhepten-3, $\alpha$-Methylstyrol, Hexen, Hexin, Propin, 1-Dodecen, 1-Eicosen, 2-Methylbuten-1.

Von besonderer praktischer Bedeutung ist das 2-Methylbuten-1 und das 2-Methylbuten-2, beides Nebenprodukte bei der Direktsynthese (Rochow-Müller-Verfahren) von Methylchlorsilanen.

Das erfindungsgemäße Verfahren kann wahlweise mit oder ohne Lösungsmittel durchgeführt werden. Geeignet sind z.B. gesättigte Kohlenwasserstoff-Praktionen, bei denen der Siedebereich nicht in den Siedebereich des Produktes bzw. einer evtl. im Überschuß eingesetzten Ausgangskomponente, die zurückgewonnen werden kann, liegt.

Vorzugsweise wird erfindungsgemäße Verfahren beim Druck der umgebenden Atmosphäre durchgeführt, weil dies den geringsten Aufwand erfordert. Falls erwünscht, können jedoch auch höhere oder niedere Drücke angewandt werden. Ersteres ist z.B. dann von Vorteil, wenn das Alken bzw. Alkin gasförmig ist.

Die bei dem erfindungsgemäßen Verfahren erzielten Umsätze können 80—100 Molprozent erreichen, bezogen jeweils auf den in der geringsten Menge eingesetzten Reaktionsteilnehmer.

Das Verfahren kann diskontinuierlich oder kontinuierlich betrieben werden. Letzteres ist besonders bei der Darstellung von Olefin-substituierten Alkylchlorsilanen bevorzugt, um eine evtl. mögliche Diaddition bzw. Polymerisation zu verhindern. Das olefinsubstituierte Silan wird bei einer solchen Verfahrensweise kontinuierlich aus dem Reaktionsgemisch abgetrennt.

Die bei dem erfindungsgemäßen Verfahren benötigten Reaktionszeiten sind in der Regel kurz und werden z. Teil durch die Wärmetönung der Reaktion bzw. der Löslichkeit der gasförmigen Alkene bzw. Alkine bestimmt.

Die Aufarbeitung der Reaktionsprodukte erfolgt nach an sich üblichen und bekannten Verfahren, wobei im allgemeinen der Katalysator abgetrennt bzw. desaktiviert und die Rohprodukte z.B. durch Destillation getrennt und gegebenenfalls gereinigt werden.

Beim erfindungsgemäßen Verfahren ist ferner auf den Auschluß von Feuchtigkeit, sowohl in der Apparatur als auch bei Lösungsmittel, Reagenz und Reaktant sowie Katalysator zu achten.

Der Vorteil des erfindungsgemäßen Verfahrens besteht vor allem darin, daß keine erhöhte Temperatur benötigt wird, der guten Zugänglichkeit des Katalysators sowie in der Art der erhaltenen Produkte. Von besonderem Vorteil ist hierbei die Möglichkeit zur Darstellung von Alkylchlorsilanen mit stark verzweigten Alkylresten.

Das erfindungsgemäße Verfahren soll nun anhand der folgenden Beispiele näher erläutert werden.

## Beispiele 1—3
## (Vergleichbeispiel)

Jeweils 1 Mol Dimethylchlorsilan und 1 Mol 2-Methylbuten-2 (Isoamylen) werden bei Raumtemperatur unter Sauerstoff und Feuchtigkeitsausschluß mit den folgenden Katalysatoren versetzt.

Beispiel 1 — $H_2PtCl_6$

Beispiel 2 — "Lamoraux" — Katalysator (vgl. z.B. DT—AS 1 257 752)

Beispiel 3 — $Pt[P(C_6H_5)_3]_4$

Die Katalysatorkonzentration betrug jeweils 100 ppm Platin bezogen auf das Silan. Nach 24 stündigem Rühren wurden die Proben analysiert. Es lagen die Ausgangskomponenten, Dimethylchlorsilan und Isoamylen unverändert vor. Eine Hydrosilylierung war unter den gewählten Bedingungen nicht eingetreten.

## Beispiele 4—12

Allgemeine Arbeitsvorschriften:

In einem 0,5 l Dreihalskolben mit Innenthermometer, Rückflußkühler und Tropftrichter bzw. Gaseinleitungsrohr werden ein Mol Dimethylchlorsilan auf 5°C abgekühlt und 1 g Katalysator zugegeben.

Katalysator:

Beispiele 4—10: $AlCl_3$

Beispiel 11: $Al\ Br_3$

Beispiel 12: Aluminiumoxidchlorid (Al-Gehalt 21,2%; Cl-Gehalt 60,7%)

Ein Mol (bei Gasen großer Überschuß) der zu addierenden Verbindung mit Kohlenstoff-Kohlenstoff-Mehrfachbindung wird unter Rühren (Magnetrührer) so zugegeben (zugetropft bzw. eingeleitet), daß die Reaktionstemperatur 10°C nicht überschreitet (Kühlung).

Vergleichbare (z.T. bessere) Versuchsergebnisse werden bei gemeinsamer Zugabe von Dimethylchlorsilan und Alken bzw. Alkin zu einer gekühlten z.B. Cyclohexan/$AlCl_3$ Suspension erhalten.

— Bei einigen Alkenen bzw. Alkinen ist z.T. notwendig, zu Beginn der Reaktion auf ca. 28—35°C zu erwärmen und nach Beginn der Reaktion die Temperatur zu senken. —

Die Ergebnisse der Verfahrensweisen sind in der folgenden Tabelle zusammengefaßt.

| Beispiel Nr. | Silan | Alken / Alkin | Produkt | Ausbeute |
|---|---|---|---|---|
| (4) | $(CH_3)_2SiClH$ | 2-Methylbuten-2 (Isoamylen) | 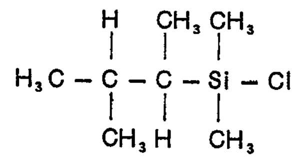 | 95 % |
| (5) | $(CH_3)_2SiClH$ | Propen | 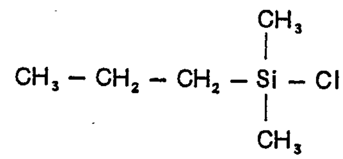 | 70 % |
| (6) | $(CH_3)_2SiClH$ | Hexen-1 | 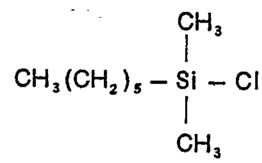 | 81 % |
| (7) | $(CH_3)_2SiClN$ | Acetylen | 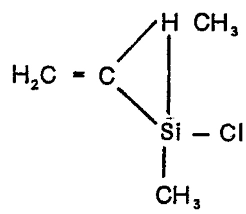 | 70 % |
| (8) | $(CH_3)_2SiClH$ | Cyclohexen | 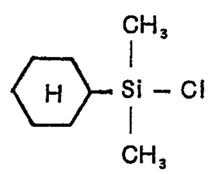 | 72 % |
| (9) | $(CH_3)_2SiClH$ | Styrol | 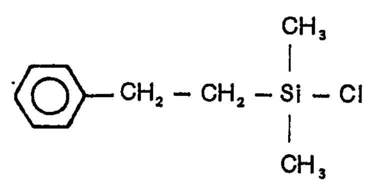 | 80 % |
| (10) | $(CH_3)_2SiClH$ | α-Methylstyrol | 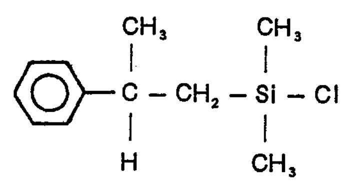 | 85 % |
| (11) | $(CH_3)_2SiClH$ | 2-Methylbuten-2 | 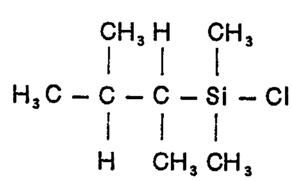 | 90 % |

| Beispiel Nr. | Silan | Alken/Alkin | Produkt | Ausbeute |
|---|---|---|---|---|
| (12) | $(CH_3)_2SiClH$ | 2-Methylbuten-2 | 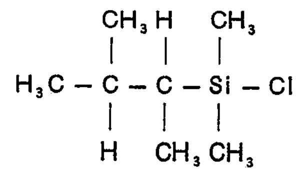 | 80 % |

Die physikalischen Daten der Produkte 5—10 sind identisch mit den Lit.-Angaben.

Das Reaktionsprodukt von Beispiel 4, 1,2-Dimethylpropyl-1-dimethylchlorsilan $Kp._{760}$ 153°C; D—0,9; $n_D^{20}$ 1,4360 wurde erstmals hergestellt; seine Struktur konnte $^1H$- und $^{13}C$-NMR-spektroskopisch bestätigt werden. Es eignet sich in besonderer Weise zur Silylierung von z.B. Alkoholen oder organischen Säuren, wobei die entstehenden Silyläther oder Silylester gesteigerte Hydrolysestabilität und erhöhte Lipophilie besitzen.

**Patentansprüche**

1. Verfahren zur Addition von Olefinen oder Acetylenen an Silane der allgemeinen Formel

$$R_1R_2SiXH$$

wobei

X für Cl oder Br,

$R_1$ und $R_2$ — gleich oder verschieden — für einen geradkettigen oder verzweigten oder cyclischen Alkylrest mit 1—20 C-Atomen steht, in Gegenwart eines Metallhalogenids, dadurch gekennzeichnet, daß man die Addition in Gegenwart von Aluminiumchlorid, -bromid, -oxidchlorid und/oder oxidbromid bei Temperaturen von −30 bis +60°C durchführt.

2. Verfahren nach Anspruch 1, dadurch gekennzeichnet, daß man als Silan Dimethylchlorsilan einsetzt.

3. Verfahren nach Anspruch 1 und 2, dadurch gekennzeichnet, daß man als Alken 2-Methylbuten-1 und/oder 2-Methylbuten-2 einsetzt.

4. 1,2-Dimethylpropyl-1-dimethylchlorsilan.

**Revendications**

1. Procédé d'addition d'oléfines ou d'acétylènes sur des silanes de formule générale:

$$R_1R_2SiXH$$

dans laquelle:

X désigne du chlore ou du brome,

$R_1$ et $R_2$ — égaux ou différents — représentent un reste alkyle à chaîne droite ou ramifié ou cyclique de 1 à 20 atomes de carbone, en présence d'un halogénure métallique, caractérisé en ce qu'on conduit l'addition en présence de chlorure, de bromure, d'oxychlorure et/ou d'oxybromure d'aluminium à des températures de −30 à +60°C.

2. Procédé suivant la revendication 1, caractérisé en ce qu'on utilise comme silane le diméthylchlorosilane.

3. Procédé suivant les revendications 1 et 2, caractérisé en ce qu'on utilise comme alcène le 2-méthylbutène-1 et/ou le 2-méthylbutène-2.

4. Le 1,2-diméthylpropyl-1-diméthylchlorosilane.

**Claims**

1. Process for the addition of olefins or acetylenes onto silanes of the general formula

$$R_1R_2SiXH$$

wherein

X represents Cl or Br, and

$R_1$ and $R_2$ are identical or different and represent a straight-chain or branched or cyclic alkyl radical with 1—20 C atoms, in the presence of a metal halide, characterised in that the addition is carried out in the presence of aluminium chloride, aluminium bromide, aluminium oxychloride and/or aluminium oxybromide, at temperatures of —30 to +60°C.

2. Process according to Claim 1, characterised in that the silane used is dimethylchlorosilane.

3. Process according to Claim 1 and 2, characterised in that the alkene used is 2-methylbut-1-ene and/or 2-methylbut-2-ene.

4. 1,2-dimethylpropyl-1-dimethylchlorosilane.